(19) Europäisches Patentamt
European Patent Office
Office européen des brevets

(11) **EP 1 901 505 A2**

(12) **EUROPEAN PATENT APPLICATION**

(43) Date of publication:
**19.03.2008 Bulletin 2008/12**

(51) Int Cl.:
*H04L 25/02* [(2006.01)]   *H04L 27/26* [(2006.01)]

(21) Application number: **07252749.2**

(22) Date of filing: **09.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **12.09.2006 GB 0617941**

(71) Applicant: **Kabushiki Kaisha Toshiba**
**Minato-ku, Tokyo 105-8001 (JP)**

(72) Inventors:
 • **Ponnampalam, Vishakan**
 **c/o Toshiba Research Europe Limited**
 **Bristol BS1 4ND (GB)**

 • **Lillie, Andrew George**
 **c/o Toshiba Research Europe Limited**
 **Bristol BS1 4ND (GB)**
 • **Sandell, Magnus Stig Torsten**
 **c/o Toshiba Research Europe Limited**
 **Bristol BS1 4ND (GB)**
 • **McNamara, Darren Phillip**
 **c/o Toshiba Research Europe Limited**
 **Bristol BS1 4ND (GB)**

(74) Representative: **Round, Edward Mark**
 **Marks & Clerk**
 **90 Long Acre**
 **London WC2E 9RA (GB)**

(54) **Wireless communication apparatus**

(57)    In a lattice-reduction-aided receiver based wireless communications system, outputs are determined on the basis of a received signal, the received signal being modulated onto a plurality of sub-carriers. The method by which this is achieved comprises obtaining an estimate of the channel response for a first of the sub-carriers, applying a lattice reduction transformation to the channel response estimate for the first sub-carrier to derive a reduced basis channel response estimate for the first sub-carrier and, for each further sub-carrier in turn, multiplying the channel response estimate for the further subcarrier by the lattice reduction transformation applied to the channel response estimate for the previously considered subcarrier and applying a lattice reduction transformation to the transformed channel response estimate to derive a reduced basis channel response estimate, equalising the received subcarrier signals in accordance with their respective reduced basis channel response estimates, and determining an estimate of the transmitted signal therefrom.

FIGURE 5

**Description**

Field of the Invention

The present invention is in the field of wireless communication, and particularly, but not exclusively, the field of multiple input multiple output (MIMO) communications systems.

Background of the Invention

Conventional communication systems can be represented mathematically as:

$$\mathbf{y} = \mathbf{Hx} + \mathbf{v}$$

in which, for a MIMO communication system, $\mathbf{y}$ is an $n$-by-1 vector representing the received signal, $\mathbf{H}$ is an $n$-by-$m$ channel matrix modelling the transmission characteristics of the communications channel, $\mathbf{x}$ is an $m$-by-1 vector representing transmit symbols, $\mathbf{v}$ is an $n$-by-1 noise vector and wherein $m$ and $n$ denote the number of transmit and receive antennas respectively.

It will be understood by the skilled reader that the same representation can be used for multi-user detection in CDMA systems.

Recent publications have demonstrated how the use of a technique called Lattice Reduction can improve the performance of MIMO detection methods.

For example, "Lattice-Reduction-Aided Detectors for MIMO Communication Systems", (H. Yao and G.W. Womell, Proc. IEEE Globecom, Nov 2002, pp. 424-428) describes Lattice-reduction (LR) techniques for enhancing the performance of multiple-input multiple-output (MIMO) digital communication systems.

In addition, "Low-Complexity Near-Maximum-Likelihood Detection and Precoding for MIMO Systems using Lattice Reduction", (C. Windpassinger and R. Fischer, in Proc. IEEE Information Theory Workshop, Paris, March, 2003, pp. 346-348) studies the lattice-reduction-aided detection scheme proposed by Yao and Wornell. It extends this with the use of the well-known LLL algorithm, which enables the application to MIMO systems with arbitrary numbers of dimensions.

"Lattice-Reduction-Aided Receivers for MIMO-OFDM in Spatial Multiplexing Systems", (I. Berenguer, J. Adeane, I. Wassell and X. Wang, in Proc. Int. Symp. on Personal Indoor and Mobile Radio Communications, Sept. 2004, pp. 1517-1521, hereinafter referred to as "Berenguer et al.") describes the use of Orthogonal Frequency Division Multiplexing (OFDM) to significantly reduce receiver complexity in wireless systems with Multipath propagation, and notes its proposed use in wireless broadband multi-antenna (MIMO) systems.

Finally, "MMSE-Based Lattice-Reduction for Near-ML Detection of MIMO Systems", (D. Wubben, R. Bohnke, V. Kuhn and K. Kammeyer, in Proc. ITG Workshop on Smart Antennas, 2004, hereinafter referred to as "Wubben et al.") adopts the lattice-reduction aided schemes described above to the MMSE criterion.

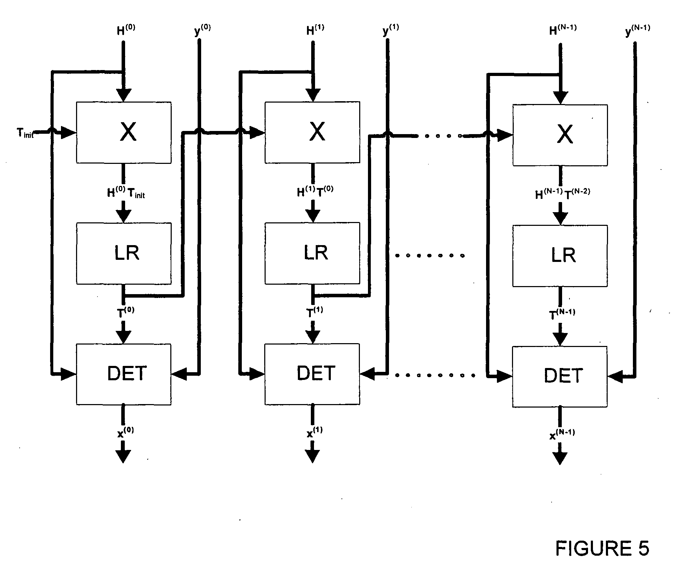

The techniques used in the publications described above use the concept that mathematically, the columns of the channel matrix, $\mathbf{H}$, can be viewed as describing the basis of a lattice. An equivalent description of this lattice (a so-called 'reduced basis') can therefore be calculated so that the basis vectors are close to orthogonal. If the receiver then uses this reduced basis to equalise the channel, noise enhancement can be kept to a minimum and detection performance will improve (such as, as illustrated in Figure 5 in Wubben et al.). This process comprises the steps described as follows:

$\mathbf{y}_r$, $\mathbf{x}_r$ and $\mathbf{H}_r$ are defined to be the real-valued representations of $\mathbf{y}$, $\mathbf{x}$, and $\mathbf{H}$ respectively, such that:

$$\mathbf{y}_r = \begin{bmatrix} \mathrm{Re}(\mathbf{y}) \\ \mathrm{Im}(\mathbf{y}) \end{bmatrix}, \quad \mathbf{x}_r = \begin{bmatrix} \mathrm{Re}(\mathbf{x}) \\ \mathrm{Im}(\mathbf{x}) \end{bmatrix}, \quad \mathbf{H}_r = \begin{bmatrix} \mathrm{Re}(\mathbf{H}) & -\mathrm{Im}(\mathbf{H}) \\ \mathrm{Im}(\mathbf{H}) & \mathrm{Re}(\mathbf{H}) \end{bmatrix}$$

where Re() and Im() denote the real and imaginary components of their arguments.

It will be noted that Berenguer et al. describes the equivalent method in the complex field, though for the purpose of clarity the Real representation of the method is used herein.

A number of lattice reduction algorithms exist in the art. One suitable lattice reduction algorithm is the Lenstra-Lenstra-Lovasz (LLL) algorithm referred to above, which is disclosed in Wubben et al., and also in "Factoring Polynomials with Rational Coefficients", (A. Lenstra, H. Lenstra and L. Lovasz, Math Ann., Vol. 261, pp. 515-534, 1982, hereinafter referred to as "Lenstra et al."), and in "An Algorithmic Theory of Numbers, Graphs and Convexity", (L. Lovasz, Philadelphia, SIAM, 1980, hereinafter referred to as "Lovasz").

Any one of these can be used to calculate a transformation matrix, T, such that a reduced basis, $\tilde{\mathbf{H}}_r$, is given by

$$\tilde{\mathbf{H}}_r = \mathbf{H}_r \mathbf{T}$$

The matrix **T** contains only integer entries and its determinant is +/-1.

After lattice reduction, the system is re-expressed as:

$$\begin{aligned} \mathbf{y}_r &= \mathbf{H}_r \mathbf{x}_r + \mathbf{v}_r \\ &= \mathbf{H}_r \mathbf{T} \mathbf{T}^{-1} \mathbf{x}_r + \mathbf{v}_r \\ &= \tilde{\mathbf{H}}_r \mathbf{T}^{-1} \mathbf{x}_r + \mathbf{v}_r \\ &= \tilde{\mathbf{H}}_r \mathbf{z} + \mathbf{v}_r \end{aligned}$$

where $\mathbf{z}_r = \mathbf{T}^{-1}\mathbf{x}_r$. The received signal, $\mathbf{y}_r$, in this redefined system is then equalised to obtain an estimate of $\mathbf{z}_r$. This equalisation process then employs, for example, a linear ZF technique, which obtains:

$$\tilde{\mathbf{z}}_r = (\tilde{\mathbf{H}}_r^* \tilde{\mathbf{H}}_r)^{-1} \tilde{\mathbf{H}}_r^* \mathbf{y}_r$$

Since $\tilde{\mathbf{H}}$, is close to orthogonal, $\tilde{\mathbf{z}}_r$ should suffer much less noise enhancement than if the receiver directly equalised the channel $\tilde{\mathbf{H}}_r$.

Of course, other equalisation techniques could be used. For example, MMSE techniques, or more complex successive interference cancellation based methods, such as in the published prior art identified above, could be considered for use.

A receiver in accordance with the above operates in the knowledge that the transmitted symbols contained in **x** are obtained from an M-QAM constellation. With this constraint, $\tilde{\mathbf{z}}_r$ can then be quantised in accordance with the method indicated in Wubben et al.:

$$\hat{\mathbf{z}}_r = \alpha Q\left\{\frac{1}{\alpha}\left(\tilde{\mathbf{z}}_r - \mathbf{T}^{-1}\mathbf{1}\beta\right)\right\} + \mathbf{T}^{-1}\mathbf{1}\beta$$

where Q{} is the quantisation function that rounds each element of its argument to the nearest integer, and where **1** is a 2*m-by-1 vector of ones.

It will be understood from the above that, the quantisation function apart, the remaining operations are a result of M-QAM constellations being scaled and translated versions of the integer lattice. The integer quantisation therefore requires the same simple scaling and translation operations.

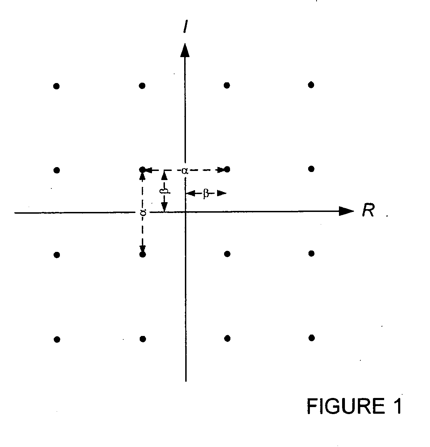

As shown in Figure 1, the scalar values $\alpha$ and $\beta$ are obtained from the definition of the M-QAM constellation in use, and $\alpha$ is equal to the minimum distance between two constellation points while $\beta$ corresponds to the minimum between the constellation points and the Imaginary (I) and Real (R) axes (i.e. minimum offset from the origin in the I and R directions). In the present example, a 16-QAM constellation is used, having real and imaginary components of {+/-1, +/-3}.

Finally, the estimate $\hat{\mathbf{x}}_r$ of $\mathbf{x}_r$ is obtained by this method as

$$\hat{\mathbf{x}}_r = \mathbf{T}\hat{\mathbf{z}}_r$$

Occasionally, if errors are present in the estimate of $\hat{\mathbf{z}}_r$, then it is possible that some of the symbol estimates in $\hat{\mathbf{x}}_r$ may not be valid symbols. In such cases, these symbols are mapped to the nearest valid symbol. For example, for the present example employing 16-QAM, the values +/-1, +/-3 may define the valid entries in $\hat{\mathbf{x}}_r$. Therefore, if a component of $\hat{\mathbf{x}}_r$ were, for example, equal to +5, then this would be mapped to a value of +3.

UK Patent application 0610847.6, as yet unpublished, describes an approach to obtaining outputs from a received signal in a lattice reduction aided receiver. The approach taken is to apply a lattice reduction technique to a plurality of sets of sub-carriers in a multi carrier wireless communications system to generate a reduced basis channel response. This results in a significant complexity reduction.

In general terms, aspects of the present invention provide an approach to detection which extends at least in part from the disclosure of UK Patent application 0610847.6.

Summary of the Invention

Embodiments of the invention include apparatus and methods for determining outputs from a received signal in a lattice-reduction-aided receiver based multi-carrier wireless communications system.

An aspect of the invention provides a method for determining outputs on the basis of a received signal in a lattice-reduction-aided receiver based wireless communications system, the received signal being modulated onto a plurality of sub-carriers, the method comprising obtaining an estimate of the channel response for a first of said sub-carriers, applying a lattice reduction transformation to said channel response estimate for said first sub-carrier to derive a reduced basis channel response estimate for the first sub-carrier and, for each further sub-carrier in turn, multiplying the channel response estimate for said further subcarrier by the lattice reduction transformation applied to the channel response estimate for the previously considered subcarrier and applying a lattice reduction transformation to said transformed channel response estimate to derive a reduced basis channel response estimate, equalising said received subcarrier signals in accordance with their respective reduced basis channel response estimates, and determining an estimate of the transmitted signal therefrom.

A further aspect of the invention provides a method for determining outputs on the basis of a received signal in a lattice-reduction-aided receiver based wireless communications system, the received signal being modulated onto a plurality of sub-carriers, the method comprising obtaining a group-wide estimate of the channel response for a first group of said sub-carriers, applying a lattice reduction transformation to said group-wide channel response estimate for said first group and, for each further group in turn, obtaining a group-wide estimate of the channel response for said further group and multiplying said group-wide channel response estimate for said further group by the lattice reduction transformation applied to the average channel response estimate for the previously considered group and applying a lattice reduction transformation to said transformed group-wide channel response estimate to derive a reduced basis group-wide channel response estimate, equalising said received subcarrier signals in accordance with their respective reduced basis group-wide channel response estimates and determining an estimate of the transmitted signal therefrom.

In accordance with the further aspect, the groups of sub-carriers may comprise the same number of sub-carriers. Alternatively, the number of sub-carriers per group can be variable and dependent upon the MIMO channel.

The step of obtaining a group-wide channel response estimate for a group of subcarriers can preferably comprise one of:

an element wise average (which may be a mean or a median) of channel response estimates for sub-carriers in said group; and
a selected one of the channel response estimates for the sub-carriers in said group.

The sub-carriers may be frequency division subcarriers. The subcarriers, or groups thereof as the case may be, may be considered in turn with respect to adjacency in the frequency domain.

A still further aspect of the invention provides apparatus for determining outputs on the basis of a received signal in a lattice-reduction-aided receiver based wireless communications system, the received signal being modulated onto a plurality of sub-carriers, the apparatus comprising channel response estimation means for estimating the channel response for one of said sub-carriers under consideration, initial transformation means for applying an initial transformation to said channel response estimate, lattice reduction transformation means for applying a lattice reduction transformation to said channel response estimate for said sub-carrier to derive a reduced basis channel response estimate for said sub-carrier, such that, for sub-carriers under consideration after the first sub-carrier, the initial transformation comprises the lattice reduction transformation applied by said lattice reduction transformation means for the preceding sub-carrier, equalising means for equalising said received subcarrier signals in accordance with their respective reduced basis channel response estimates, and transmitted signal estimation means for determining an estimate of the transmitted signal therefrom.

A still further aspect of the invention provides apparatus for determining outputs on the basis of a received signal in a lattice-reduction-aided receiver based wireless communications system, the received signal being modulated onto a plurality of sub-carriers, the apparatus comprising means for obtaining a group-wide estimate of the channel response for a first group of said sub-carriers, means for applying a lattice reduction transformation to said group-wide channel response estimate for said first group and means for obtaining, for each further group in turn, a group-wide estimate of the channel response for said further group and multiplying said group-wide channel response estimate for said further group by the lattice reduction transformation applied to the average channel response estimate for the previously considered group and applying a lattice reduction transformation to said transformed group-wide channel response estimate to derive a reduced basis group-wide channel response estimate, means for equalising said received subcarrier signals in accordance with their respective reduced basis group-wide channel response estimates and means for determining an estimate of the transmitted signal therefrom.

The skilled person will recognise that the above-described apparatus and methods may be implemented using and/or embodied in processor control code. Thus in a further aspect the invention provides such code, for example on a carrier medium such as a disk, CD- or DVD-ROM, programmed memory such as read-only memory (Firmware) or on a data carrier such as an optical or electrical signal carrier. Embodiments of the invention may be implemented on a DSP (Digital Signal Processor), ASIC (Application Specific Integrated Circuit) or FPGA (Field Programmable Gate Array). Thus the code may comprise conventional program code, or micro-code, or, for example, code for setting up or controlling an ASIC or FPGA. In some embodiments the code may comprise code for a hardware description language such as Verilog (Trade Mark), VHDL (Very high speed integrated circuit Hardware Description Language), or SystemC. As the skilled person will appreciate, processor control code for embodiments of the invention may be distributed between a plurality of coupled components in communication with one another.

Brief description of the Drawings

Figure 1 illustrates a conventional M-QAM constellation;

Figure 2 illustrates schematically a MIMO system including a transmitter and a receiver;

Figure 3 illustrates in further detail the receiver of figure 2;

Figure 4 illustrates a per sub-channel lattice reduction process in accordance with a background example by which the invention is illustrated herein;

Figure 5 illustrates a lattice reduction process in accordance with a first embodiment of the invention;

Figure 6 illustrates a lattice reduction process in accordance with a second embodiment of the invention;

Figure 7 illustrates an element of the lattice reduction process illustrated in figure 6;

Figure 8 illustrates a graph of complexity of Lattice Reduction aided multi-carrier MIMO detection cooperative basis reduction processes for multi-carrier communications systems in accordance with said background example, and said first and second embodiments of the present invention; and

Figure 9 illustrates a graph of performance for the examples employed in figure 8.

Detailed Description

The present invention will be described in further detail on the basis of the appended drawings.

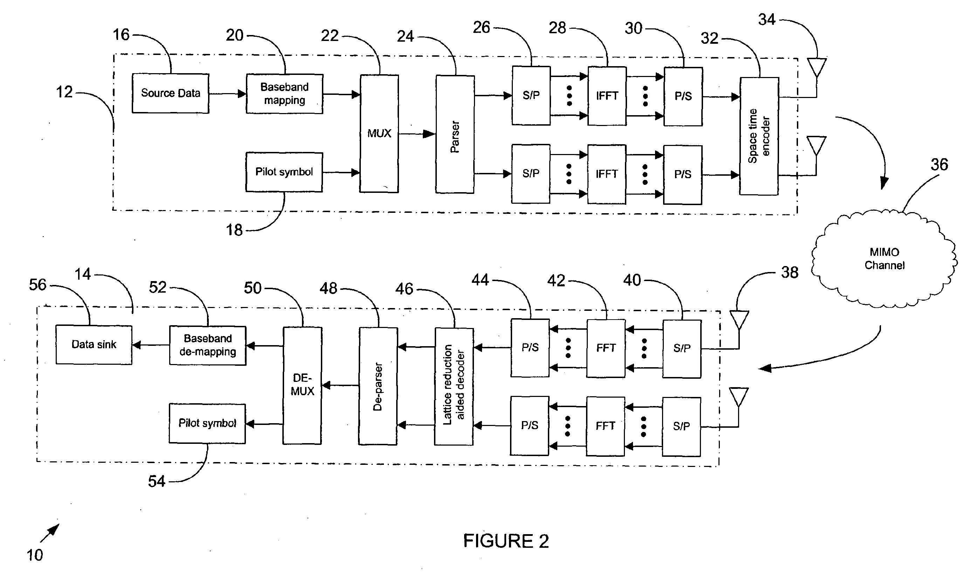

Figure 2 illustrates such a system, comprising a MIMO data communications system 10 of generally known construction. New components, in accordance with a specific embodiment of the invention, will be evident from the following description.

The communications system 10 comprises a transmitter device 12 and a receiver device 14. It will be appreciated that, in many circumstances, a wireless communications device will be provided with the facilities of a transmitter and a receiver in combination but, for this example, the devices have been illustrated as one way communications devices for reasons of simplicity.

The transmitter device 12 comprises a data source 16, which provides data (comprising information bits) to a baseband mapping unit 20, which optionally provides forward error correction coding, channel interleaving and which outputs modulated symbols. The modulated symbols are provided to a multiplexer 22 which combines them with pilot symbols from a pilot symbol generator 18, which provides reference amplitudes and phases for frequency synchronisation and coherent detection in the receiver and known (pilot and preamble) data for channel estimation. The multiplexed symbols are provided to a parser 24, which creates a plurality of parallel spatial streams.

The combination of blocks 26, 28 and 30 convert the serial spatial data stream from parser 24 to a plurality of parallel, reduced data rate streams, performs an IFFT on these data streams to provide an OFDM symbol, and then converts the multiple subcarriers of this OFDM symbol to a single serial data stream. Processes 26, 28 and 30 are performed in parallel for each spatial stream. The space-time encoder 32 encodes an incoming symbol or symbols as a plurality of code symbols for simultaneous transmission from a transmitter antenna array 34 comprising a plurality of transmit antennas. In this illustrated example, two transmit antennas are provided, though practical implementations may include more antennas depending on the application.

The encoded transmitted signals propagate through a MIMO channel 36 defined between the transmit antenna array 34 and a corresponding receive antenna array 38 of the receiver device 14. The receive antenna array 38 comprises a plurality of receive antennas which provide a plurality of inputs to a parallel bank of blocks 40, 42 and 44 which perform a serial-to-parallel conversion, FFT, and parallel-to-serial re-conversion independently for each received stream, providing an output to the lattice-reduction-aided decoder 46. In this specific embodiment, the receive antenna array 38 comprises two receive antennas.

The lattice-reduction-aided decoder 46 has the task of removing the effect of the MIMO channel 36. The output of the lattice-reduction-aided decoder 46 comprises a plurality of signal streams, one for each transmit antenna, each carrying so-called soft or likelihood data on the probability of a transmitted bit having a particular value. This data is provided to a de-parser 48 which reverses the effect of the parser 24, and the deparsed bits output by this de-parser 48 are then presented to a de-multiplexer 50 which separates the pilot symbol signal 54 from the data symbols. The data symbols are then demodulated and de-mapped by base-band de-mapping unit 52 to provide a detected data output 56. Broadly speaking the receiver 14 is a mirror image of the transmitter 12. The transmitter and receiver may be combined to form an OFDM transceiver.

The specific function of the lattice-reduction-aided decoder 46 will be described in due course.

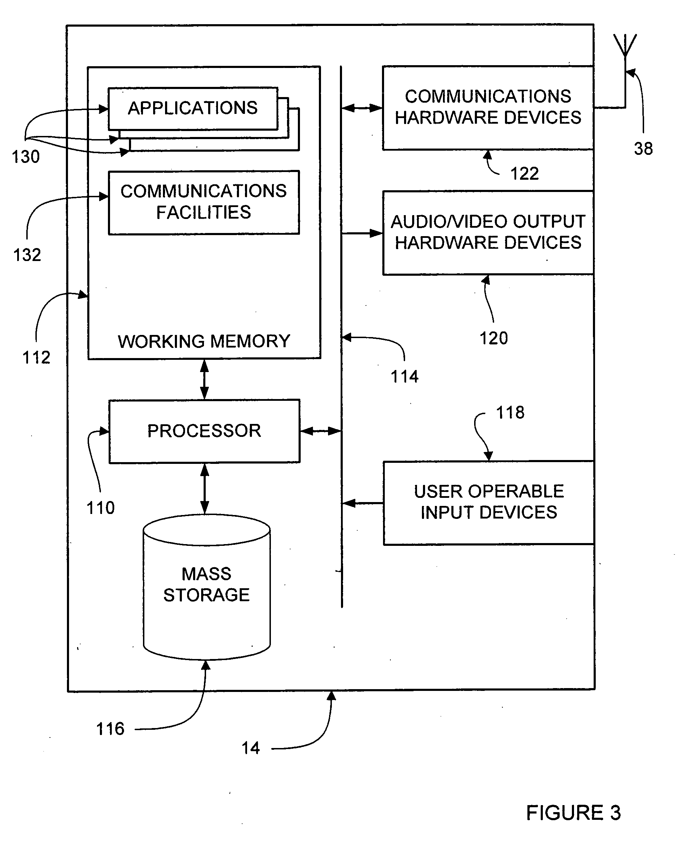

Figure 3 illustrates schematically hardware operably configured (by means of software or application specific hardware components) as the receiver device 14. The receiver device 14 comprises a processor 110 operable to execute machine code instructions stored in a working memory 112 and/or retrievable from a mass storage device 116. By means of a general purpose bus 114, user operable input devices 118 are capable of communication with the processor 110. The user operable input devices 118 comprise, in this example, a keyboard and a mouse though it will be appreciated that any other input devices could also or alternatively be provided, such as another type of pointing device, a writing tablet, speech recognition means, or any other means by which a user input action can be interpreted and converted into data signals.

An alternative implementation could also include a transceiver without predefined user interface.

Audio/video output hardware devices 120 are further connected to the general purpose bus 114, for the output of information to a user. Audio/video output hardware devices 120 can include a visual display unit, a speaker or any other device capable of presenting information to a user.

Communications hardware devices 122, connected to the general purpose bus 114, are connected to the receive antennas 38. In the illustrated embodiment in Figure 3, the working memory 112 stores user applications 130 which, when executed by the processor 110, cause the establishment of a user interface to enable communication of data to and from a user. The applications in this embodiment establish general purpose or specific computer implemented utilities that might habitually be used by a user.

Communications facilities 132 in accordance with the specific embodiment are also stored in the working memory 112, for establishing a communications protocol to enable data generated in the execution of one of the applications 130 to be processed and then passed to the communications hardware devices 122 for transmission and communication with another communications device. It will be understood that the software defining the applications 130 and the communications facilities 132 may be partly stored in the working memory 112 and the mass storage device 116, for convenience. A memory manager could optionally be provided to enable this to be managed effectively, to take account of the possible different speeds of access to data stored in the working memory 112 and the mass storage device 116.

On execution by the processor 110 of processor executable instructions corresponding with the communications facilities 132, the processor 110 is operable to establish communication with another device in accordance with a recognised communications protocol.

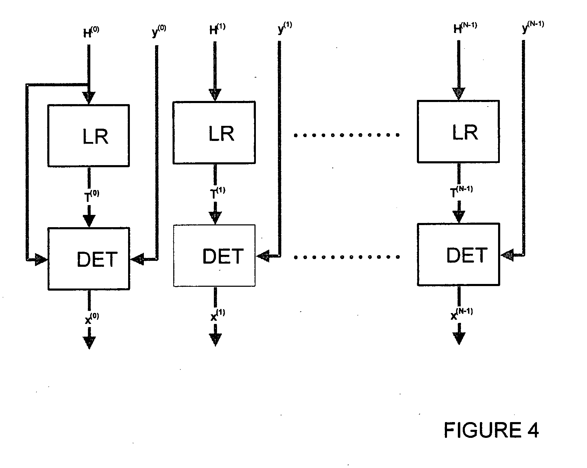

A schematic functional diagram of a conventional receiver structure for a multi-carrier MIMO system, employing Lattice Reduction, is illustrated in figure 4. Here a total of N subcarriers are employed. Lattice Reduction aided MIMO detection is performed independently for each subcarrier as follows:

1. The Lattice Reduction operation is performed for the MIMO channel matrix associated to the $i$-th subcarrier, denoted $\mathbf{H}^{(i)}$, by the block marked 'LR'. The transformation matrix, given by $\mathbf{T}^{(i)}$, corresponding to the reduced lattice is passed to the block denoted 'DET' along with the channel matrix and the received signal $\mathbf{y}^{(i)}$.

2. The block marked 'DET' performs equalisation (e.g. ZF equalisation), quantisation and de-mapping operations described in the previous section. An estimate of the transmitted signal $\mathbf{x}^{(i)}$ is thus formed.

It will be observed by the reader that $\mathbf{T}^{(i)}$ denotes the transformation matrix computed by a Lattice Reduction process (for example the LLL algorithm) for the channel matrix $\mathbf{H}^{(i)}$ i.e. the reduced basis of $\mathbf{H}^{(i)}$ is given by $\widetilde{\mathbf{H}}^{(i)} = \mathbf{H}^{(i)}\mathbf{T}^{(i)}$. Now, assuming that calculation is required of the transformation $\mathbf{T}^{(i+1)}$, which corresponds to the reduced lattice of a matrix $\mathbf{H}^{(i+1)}$, the latter can be written as

$$\mathbf{H}^{(i+1)} = \mathbf{H}^{(i)} + \mathbf{E}^{(i+1)}.$$

As the channel matrices of adjacent subcarriers are correlated, the elements of $\mathbf{E}^{(i+1)}$ are small compared to $\mathbf{H}^{(i)}$. Consequently, $\mathbf{H}^{(i+1)}\mathbf{T}^{(i)}$ is very likely to be better conditioned than $\mathbf{H}^{(i+1)}$. It is well known, to those skilled in the art, that the complexity of Lattice Reduction decreases as the condition of the matrix to which it is applied improves.

Thus, instead of performing the Lattice Reduction process directly on the matrix $\mathbf{H}^{(i+1)}$, in accordance with the present embodiment of the invention, Lattice Reduction is performed on $\mathbf{H}^{(i+1)}\mathbf{T}^{(i)}$.

$\Delta^{(i+1)}$ denotes the transformation matrix corresponding to the reduced lattice of $\mathbf{H}^{(i+1)}\mathbf{T}^{(i)}$; that is, $\mathbf{H}^{(i+1)}\mathbf{T}^{(i)}\Delta^{(i+1)}$ is a reduced basis of $\mathbf{H}^{(i+1)}\mathbf{T}^{(i)}$, and consequently of $\mathbf{H}^{(i+1)}$. Thus:

$$\widetilde{\mathbf{H}}^{(i+1)} = \left[\mathbf{H}^{(i+1)}\mathbf{T}^{(i)}\right]\Delta^{(i+1)}$$
$$= \mathbf{H}^{(i+1)}\mathbf{T}^{(i+1)}$$

where

$\widetilde{\mathbf{H}}^{(i+1)}$ is the reduced basis of $\mathbf{H}^{(i+1)}$ and
$\mathbf{T}^{(i+1)} = \mathbf{T}^{(i)}\Delta^{(i+1)}$ is the corresponding transformation matrix.

It should be noted that, since both $\mathbf{T}^{(i)}$ and $\Delta^{(i+1)}$ are both unimodular matrices (since they have been computed by the Lattice Reduction process), their product, $\mathbf{T}^{(i+1)}$, is also a unimodular matrix. Thus $\mathbf{T}^{(i+1)}$ is a valid transformation matrix of $\mathbf{H}^{(i+1)}$ which provides a reduced lattice.

Reiterating, it is observed that applying Lattice Reduction on $\mathbf{H}^{(i+1)}\mathbf{T}^{(i)}$, instead on $\mathbf{H}^{(i+1)}$ directly reduces the computational complexity very significantly provided $\mathbf{H}^{(i)}$ and $\mathbf{H}^{(i+1)}$ are similar. In the extreme case, when $\mathbf{H}^{(i+1)} = \mathbf{H}^{(i)}$, the Lattice Reduction procedure would not be required to perform any operations (apart from some simple checks) as $\mathbf{H}^{(i+1)}\mathbf{T}^{(i)}(=\mathbf{H}^{(i)}\mathbf{T}^{(i)})$ is already reduced.

As described above, the overall complexity of a multi-carrier MIMO receiver may be reduced significantly using an incremental Lattice Reduction method in accordance with a specific embodiment of the invention. A receiver structure employing this technique is shown in figure 5. In this architecture, the detection is performed as follows:

1. The channel matrix,

    a. $\mathbf{H}^{(0)}$, of the *0*-th sub-carrier is multiplied by a predetermined matrix $\mathbf{T}_{init}$. ($\mathbf{T}_{init}$ is set equal to the identity matrix normally, in which case $\mathbf{H}^{(0)}\mathbf{T}_{init} = \mathbf{H}^{(0)}$)
    b. $\mathbf{H}^{(i)}$, of the *i*-th subcarrier (for $2 \leq i \leq N$-1) is multiplied by the transformation matrix $\mathbf{T}^{(i-1)}$ computed for the previous subcarrier.

2. Lattice Reduction is performed by the block denoted 'LR' for the matrix product $\mathbf{H}^{(i)}\mathbf{T}^{(i-1)}$ computed in the above step. The Lattice Reduction operation computes the overall transformation matrix, which provides the reduced basis of $\mathbf{H}^{(i)}$, taking into account the matrix product performed in the previous step.
3. The transformation matrix is then passed to the 'DET' block, which performs equalisation (e.g. ZF equalisation), quantisation and de-mapping operations described in the previous section. An estimate of the transmitted signal $\mathbf{x}^{(i)}$ is thus formed.

In the above description, the Initial Lattice reduction is performed for the subcarrier with index 0. However, it will be understood that the initial lattice reduction may be performed on any subcarrier and may be varied over time. For example, the initial Lattice Reduction operation may be performed on the *I*-th subcarrier with the best conditioned channel matrix $\mathbf{H}^{(I)}$. This will reduce the complexity of the initial Lattice Reduction operation, which is generally much more computationally costly relative to subsequent incremental Lattice Reduction operations.
In the case when the initial Lattice Reduction operation is performed on the *I*-th subcarrier, incremental Lattice Reduction computations may be carried out in two parallel streams:

- one which computes Lattice Reductions corresponds to the (*I+1*)-th subcarrier, then on the (*I+2*)-th subcarrier and so on and
- another which computes Lattice Reductions corresponds to the (*I-1*)-th subcarrier, then on the (*I-2*)-th subcarrier and so on.

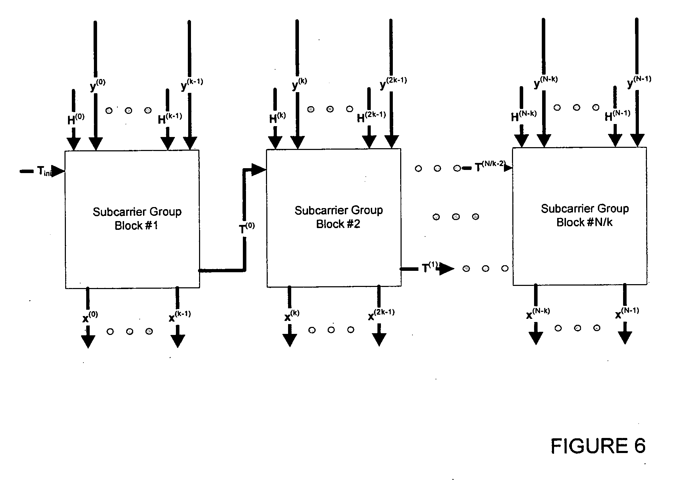

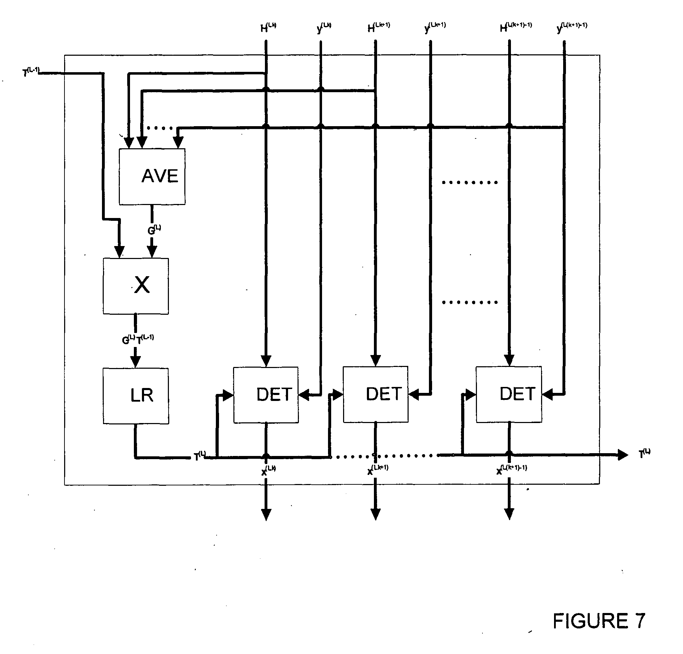

Additionally, instead of performing the initial Lattice Reduction on a single subcarrier, the initial Lattice Reduction may be performed, independently, on multiple subcarriers distributed over the range of subcarriers used. In this case, incremental Lattice Reduction calculations may be performed in multiple parallel streams, centred on the subcarriers used for initial Lattice Reduction calculations.
Compared to the conventional receiver structure (as shown in figure 4), the incremental Lattice Reduction aided receiver of the specific embodiment illustrated in figure 5 employs a matrix multiplication operation for each subcarrier. However, the additional complexity due to these matrix multiplication operations is negligible compared to the reduction in complexity achieved due to computing Lattice Reductions incrementally.
Moreover, the conventional MIMO receiver of figure 4 and the incremental detector of figure 5 are equivalent in terms of performance. The receiver complexity can be further reduced by combining the incremental lattice reduction technique to the subcarrier grouping technique presented in UK Patent application 0610847.6, thus forming a hybrid receiver structure. An exemplary hybrid receiver structure will now be described, with reference to figures 6 and 7 of the drawings.
As shown in figure 6, the N subcarriers used in the multi-carrier system are processed in groups of *k* contiguous subcarriers. The transformation matrix computed by Lattice Reduction operation for one group of subcarriers is passed to the next block, processing the adjacent group of subcarriers. The size of the group, *k*, is chosen such MIMO channel matrices for adjacent groups of subcarriers are significantly correlated. This allows Lattice Reduction to be performed incrementally across successive groups of subcarriers and thus reduce the overall complexity significantly.
Each group of k subcarriers is processed as illustrated in figure 7:

1. The set of MIMO channels, $\mathbf{H}^{(kL)}$, $\mathbf{H}^{(kL+1)}$,..., $\mathbf{H}^{((k+1)L-1)}$ corresponding to the *L*-th group of subcarriers is 'averaged' to form a group MIMO channel response, denoted $\mathbf{G}^{(L)}$. The term 'average' is used advisedly herein to cover all functions that transform a set of matrices $\mathbf{H}^{(kL)}$, $\mathbf{H}^{(kL+1)}$,..., $\mathbf{H}^{((k+1)L-1)}$ into a single matrix $\mathbf{G}^{(L)}$. For example, $\mathbf{G}^{(L)}$ may be computed as

- the element-wise mean/median of $\mathbf{H}^{(kL)}$, $\mathbf{H}^{(kL+1)}$,..., $\mathbf{H}^{((k+1)L-1)}$; or
- equal to any one of the matrices $\mathbf{H}^{(kL)}$, $\mathbf{H}^{(kL+1)}$,..., $\mathbf{H}^{((k+1)L-1)}$.

2. The group MIMO channel response $\mathbf{G}^{(L)}$ is then multiplied by the transformation matrix $\mathbf{T}^{(L-1)}$ which is passed from the Lattice Reduction operation performed for the previous group of subcarriers. It should be noted here that for the *0*-th group of subcarriers, $\mathbf{T}_{init}$ is set to some predefined matrix, and generally to an identity matrix.

3. Lattice reduction is performed by the block denoted 'LR' on the matrix product $\mathbf{G}^{(L)}\mathbf{T}^{(L-1)}$, computed in the above step. The lattice reduction operation computes the overall transformation matrix, $\mathbf{T}^{(L)}$, which provides the reduced basis of $\mathbf{G}^{(L)}$, taking into account the matrix product performed in the previous step.

4. The transformation matrix is then passed to *k* 'DET' blocks, which perform equalisation (e.g. ZF equalisation), quantisation and de-mapping operations described in the previous section, for each subcarrier within the group.

In the above description, the subcarriers are divided into groups of equal number of subcarriers. However it will be appreciated that the subcarriers can be divided into groups of different sizes, for example based on the MIMO channel matrices.

In the above description incremental Lattice Reduction computation is performed exploiting correlation in the frequency domain i.e. correlation of adjacent subcarriers. However, the same technique can be applied exploiting correlation in the time domain for both multi-carrier and single-carrier systems (i.e. system with single subcarrier). In this scenario, in the above description, $\mathbf{H}^{(i)}$ may be viewed as the MIMO channel of a single carrier at the *i*-th time instant.

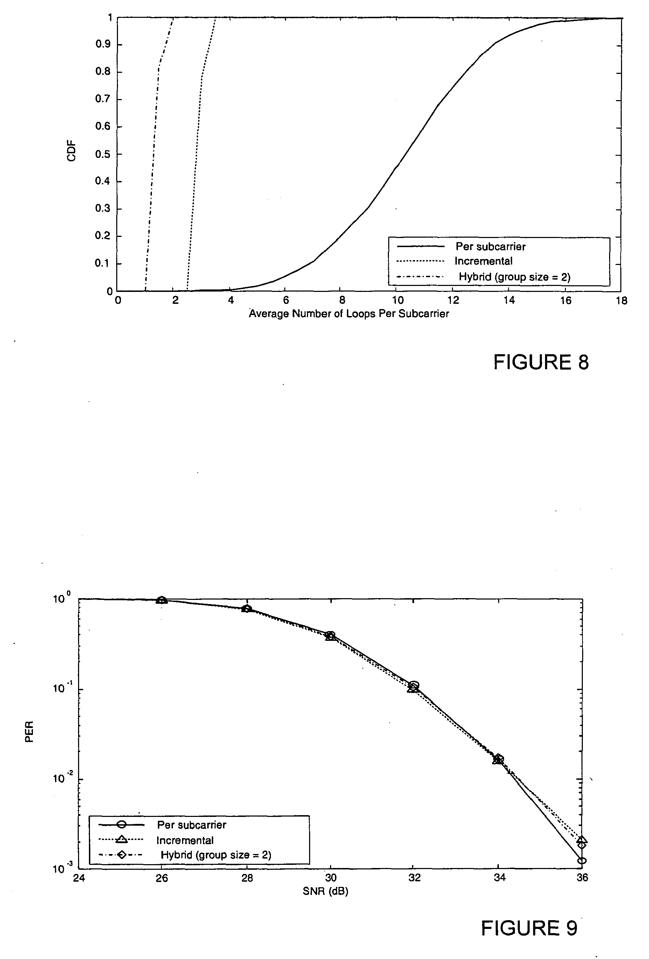

Figure 8 and Figure 9 compare the complexity and performance of conventional Lattice Reduction aided MIMO detection to the incremental and hybrid approaches presented in the current IAR for a multi-carrier MIMO system employing a 4x4 antenna configuration, 56 subcarriers, 16-QAM modulation and a 5/6 rate convolutional code.

In figure 8 the complexity is presented as the average number of 'LLL Loops' per subcarrier for each receiver structure. 'LLL Loops' is a linear measure of the time complexity of the LLL algorithm i.e. twice the number of 'LLL Loops' means that the LLL algorithm will take twice as long to execute. As the number of 'LLL Loops' required for Lattice Reduction varies depending on the MIMO channel matrix, the statistical distribution (i.e. cumulative distribution function (CDF)) of the complexity is presented. Also the number of 'LLL Loops' are reported as an average per subcarrier.

It may be seen from figure 8 that the median number of 'LLL Loops' required to perform for Lattice Reduction per-subcarrier, independently is approximately 10. On the other hand the median number of loops drops to under 3 when incremental Lattice Reduction is employed, reducing the complexity by over 70%. Finally with the use of the Hybrid technique, the median number of 'LLL Loops' can be reduced to approximately 1.5.

In figure 9, the performance of the conventional, incremental and hybrid MIMO receiver structures are compared in terms of the resulting Packet Error Rate (PER) at various Signal to Noise Ratios (SNR). It may be observed that the performance difference between the three receiver schemes is negligible, especially in the typical PER operating range of 1-10%.

Although the present disclosure is concerned with signal processing in a receiver, the Lattice Reduction techniques described herein are also applicable in the transmitter for purposes of precoding. Precoding is a technique which modifies the transmitted signal using some knowledge of the propagation channel in order to improve detection quality at the receiver.) As for MIMO detection in the receiver, the techniques proposed in the present disclosure may also be used in the transmitter to reduce complexity of precoding.

Although the described embodiments are directed to applying Lattice Reduction aided linear estimation to the problem of MIMO detection, it may also be applied to other systems which employ linear estimators.

It will be appreciated that the foregoing provides description of specific embodiments of the invention and that no limitation on the scope of protection sought herein is to be implied therefrom. The scope of protection sought is to be determined from the claims, read with reference to, but not bound by, the description and drawings.

**Claims**

1.  A method for determining outputs on the basis of a received signal in a lattice-reduction-aided receiver based wireless communications system, the received signal being modulated onto a plurality of sub-carriers, the method comprising obtaining an estimate of the channel response for a first of said sub-carriers, applying a lattice reduction transformation to said channel response estimate for said first sub-carrier to derive a reduced basis channel response estimate for the first sub-carrier and, for each further sub-carrier in turn, multiplying the channel response estimate for said further subcarrier by the lattice reduction transformation applied to the channel response estimate for the previously considered subcarrier and applying a lattice reduction transformation to said transformed channel response estimate to derive a reduced basis channel response estimate, equalising said received subcarrier signals in accordance with their respective reduced basis channel response estimates, and determining an estimate of the transmitted signal therefrom.

2.  A method for determining outputs on the basis of a received signal in a lattice-reduction-aided receiver based wireless communications system, the received signal being modulated onto a plurality of sub-carriers, the method comprising obtaining a group-wide estimate of the channel response for a first group of said sub-carriers, applying a lattice reduction transformation to said group-wide channel response estimate for said first group and, for each further group in turn, obtaining a group-wide estimate of the channel response for said further group and multiplying said group-wide channel response estimate for said further group by the lattice reduction transformation applied to the average channel response estimate for the previously considered group and applying a lattice reduction transformation to said transformed group-wide channel response estimate to derive a reduced basis group-wide channel response estimate, equalising said received subcarrier signals in accordance with their respective reduced basis group-wide channel response estimates and determining an estimate of the transmitted signal therefrom.

3. A method in accordance with claim 2 wherein the groups of sub-carriers comprise the same number of sub-carriers.

4. A method in accordance with claim 2 wherein the number of sub-carriers per group is variable and depends upon the MIMO channel.

5. A method in accordance with any one of claims 2 to 4 and wherein the step of obtaining a group-wide channel response estimate for a group of subcarriers comprises one of:

an element wise average of channel response estimates for sub-carriers in said group; and
a selected one of the channel response estimates for the sub-carriers in said group.

6. A method in accordance with claim 5 wherein, in the case that said element wise average is employed, said element wise average comprises one of:

an element wise mean; and
an element wise median.

7. A method in accordance with any preceding claim wherein said sub-carriers are frequency division sub-carriers.

8. A method in accordance with any preceding claim wherein said subcarriers, or groups thereof as the case may be, are considered in turn with respect to adjacency in the frequency domain.

9. Apparatus for determining soft estimates of transmitted bit values from a received signal in a lattice-reduction-aided receiver based wireless communications system, the received signal being modulated onto a plurality of sub-carriers, the apparatus comprising channel response estimation means for estimating the channel response for one of said sub-carriers under consideration, initial transformation means for applying an initial transformation to said channel response estimate, lattice reduction transformation means for applying a lattice reduction transformation to said channel response estimate for said sub-carrier to derive a reduced basis channel response estimate for said sub-carrier, such that, for sub-carriers under consideration after the first sub-carrier, the initial transformation comprises the lattice reduction transformation applied by said lattice reduction transformation means for the preceding sub-carrier, equalising means for equalising said received subcarrier signals in accordance with their respective reduced basis channel response estimates, and transmitted signal estimation means for determining an estimate of the transmitted signal therefrom.

10. Apparatus for determining soft estimates of transmitted bit values from a received signal in a lattice-reduction-aided receiver based wireless communications system, the received signal being modulated onto a plurality of sub-carriers, the apparatus comprising means for obtaining a group-wide estimate of the channel response for a first group of said sub-carriers, means for applying a lattice reduction transformation to said group-wide channel response estimate for said first group and means for obtaining, for each further group in turn, a group-wide estimate of the channel response for said further group and multiplying said group-wide channel response estimate for said further group by the lattice reduction transformation applied to the average channel response estimate for the previously considered group and applying a lattice reduction transformation to said transformed group-wide channel response estimate to derive a reduced basis group-wide channel response estimate, means for equalising said received subcarrier signals in accordance with their respective reduced basis group-wide channel response estimates and means for determining an estimate of the transmitted signal therefrom.

11. A method of detecting information in a received signal including the method of any of claims 1 to 8.

12. A method of pre-coding information for transmission including the method of any of claims 1 to 8.

**13.** A receiver comprising apparatus in accordance with any of claims 9 or 10.

**14.** A computer program product operable to configure a computer to process information in accordance with any of claims 1 to 8.

**15.** A computer readable storage medium comprising the computer program product of claim 14.

**16.** A computer receivable signal comprising the computer program product of claim 14.

EP 1 901 505 A2

FIGURE 1

12

FIGURE 2

EP 1 901 505 A2

APPLICATIONS

130

COMMUNICATIONS
FACILITIES

132

112

WORKING MEMORY

PROCESSOR

110

MASS
STORAGE

116

14

COMMUNICATIONS
HARDWARE DEVICES

122

38

AUDIO/VIDEO OUTPUT
HARDWARE DEVICES

120

114

118

USER OPERABLE
INPUT DEVICES

FIGURE 3

FIGURE 4

FIGURE 5

FIGURE 6

FIGURE 7

FIGURE 8

FIGURE 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0610847 A

**Non-patent literature cited in the description**

- **H. YAO ; G.W. WOMELL.** Lattice-Reduction-Aided Detectors for MIMO Communication Systems. *Proc. IEEE Globecom,* November 2002, 424-428
- **C. WINDPASSINGER ; R. FISCHER.** Low-Complexity Near-Maximum-Likelihood Detection and Precoding for MIMO Systems using Lattice Reduction. *Proc. IEEE Information Theory Workshop,* March 2003, 346-348
- **I. BERENGUER ; J. ADEANE ; I. WASSELL ; X. WANG.** Lattice-Reduction-Aided Receivers for MIMO-OFDM in Spatial Multiplexing Systems. *Proc. Int. Symp. on Personal Indoor and Mobile Radio Communications,* September 2004, 1517-1521
- **D. WUBBEN ; R. BOHNKE ; V. KUHN ; K. KAMMEYER.** MMSE-Based Lattice-Reduction for Near-ML Detection of MIMO Systems. *Proc. ITG Workshop on Smart Antennas,* 2004
- **A. LENSTRA ; H. LENSTRA ; L. LOVASZ.** Factoring Polynomials with Rational Coefficients. *Math Ann.,* 1982, vol. 261, 515-534
- **L. LOVASZ.** *An Algorithmic Theory of Numbers, Graphs and Convexity,* 1980